# EUROPEAN PATENT APPLICATION

(11) **EP 4 378 892 A1**
(43) Date of publication of application: **05.06.2024**
(21) Application number: 22848965.4
(22) Date of filing: 20.04.2022
(51) Int. Cl.: C01F 11/18, C08L 23/04, C08L 23/10, C08L 101/00, C08K 3/26

(54) **CALCIUM CARBONATE PARTICLE GROUP, RESIN COMPOSITION, AND METHOD FOR PRODUCING CALCIUM CARBONATE PARTICLE GROUP**

(30) Priority: 28.07.2021 JP 2021123113
(71) Applicant: TBM Co., Ltd., Tokyo 100-0006 (JP)
(72) Inventor: TAKAHASHI, Kenshi, Tokyo 100-0006 (JP)
(74) Representative: Epping - Hermann - Fischer
(86) International application number: PCT/JP2022/018290
(87) International publication number: WO 2023/007882

(57) **Abstract**

An object of the present invention is to provide a technique for obtaining a calcium carbonate particle group having a high ratio of cubic calcium carbonate particles. The present invention provides a calcium carbonate particle group including: 70.0% or more of cubic calcium carbonate particles relative to the number of particles in the entire calcium carbonate particle group. A length of each piece of the cubic calcium carbonate particles is 0.5 um or more and 15.0 µm or less and difference in the length of the pieces of the same cubic calcium carbonate particles is ±0.5 µm or less. The calcium carbonate particle group includes 90.0% or more of light calcium carbonate particles relative to the number of particles in the entire calcium carbonate particle group.

## Description

### Field

The present invention relates to a calcium carbonate particle group, a resin composition, and a method for producing a calcium carbonate particle group.

### Background

Light calcium carbonate is synthetic calcium carbonate produced by chemical precipitation reactions or the like. Examples of the chemical precipitation reactions include a reaction in which carbon dioxide is introduced into a calcium-containing solution. A cubic shape, a needle shape, a spindle shape, and other shapes have been known as the shape of light calcium carbonate crystals.

Until now, methods for producing light calcium carbonate having a desired shape have been developed. For example, methods for producing cubic calcium carbonate are disclosed in Patent Literatures 1 to 4.

### Citation List

### Patent Literature

Patent Literature 1: Japanese Patent Application Laid-open No. S53-43694
Patent Literature 2: Japanese Patent Application Laid-open No. S54-130500
Patent Literature 3: Japanese Patent Application Laid-open No. S61-219716
Patent Literature 4: Japanese Patent Application Laid-open No. S63-30317

### Summary

### Technical Problem

However, the inventor of the present invention has found that the conventional methods for producing cubic calcium carbonate cause calcium carbonate particles to be easily agglomerated with each other and the sufficient amount of the cubic calcium carbonate particles may fail to be obtained.

The present invention has been made in view of the above circumstance and an object of the present invention is to provide a technique for obtaining a calcium carbonate particle group having a high ratio of the cubic calcium carbonate particles.

### Solution to Problem

The inventor of the present invention has developed a calcium carbonate particle group that includes the cubic calcium carbonate particles having few impurities other than the light calcium carbonate particles and, in addition, having a uniform shape.

The inventor of the present invention also has found that such a calcium carbonate particle group is easily obtained by adjusting the amount of carbon dioxide introduced during the chemical precipitation reaction.

Based on the above findings, the inventor of the present invention has achieved the present invention. More specifically, the present invention provides the followings.
(1) A calcium carbonate particle group including:
   70.0% or more of cubic calcium carbonate particles relative to the number of particles in the entire calcium carbonate particle group, in which
   a length of each side of the cubic calcium carbonate particles is 0.5 µm or more and 15.0 µm or less and difference in the length of the sides of the same cubic calcium carbonate particles is ±0.5 um or less, and
   the calcium carbonate particle group includes 90.0% or more of light calcium carbonate particles relative to the number of particles in the entire calcium carbonate particle group.
(2) The calcium carbonate particle group according to (1), in which the length of each side of the cubic calcium carbonate particles is 1.0 µm or more and 5.0 um or less.
(3) The calcium carbonate particle group according to (1) or (2), in which a BET specific surface area of the calcium carbonate particle group is 0.1 m²/g or more and 20.0 m²/g or less.
(4) The calcium carbonate particle group according to any one of (1) to (3), in which the calcium carbonate particle group does not substantially include sodium, potassium, or magnesium.
(5) The calcium carbonate particle group according to any one of (1) to (4), in which surfaces of the cubic calcium carbonate particles are surface-treated with a fatty acid.
(6) A resin composition including:
   the calcium carbonate particle group according to any one of (1) to (5); and
   a thermoplastic resin, in which
   a mass ratio of the calcium carbonate particle group and the thermoplastic resin is 50:50 to 90:10.
(7) The resin composition according to (6), in which the mass ratio of the calcium carbonate particle group and the thermoplastic resin is 60:40 to 80:20.
(8) The resin composition according to (6) or (7), in which the thermoplastic resin is a polypropylene resin and/or a polyethylene resin.
(9) A method for producing a calcium carbonate particle group, the method including:
   a calcium content measurement step of measuring a calcium content in a calcium-containing solution including a calcium compound; and
   a crystallization step of crystallizing calcium carbonate by introducing carbon dioxide into the calcium-containing solution after the calcium content measurement step, in which
   an amount of the carbon dioxide introduced in the crystallization step is determined based on the calcium content identified in the calcium content measurement step.
(10) The method for producing according to (9), in which the amount of the carbon dioxide introduced in the crystallization step is in a mass ratio of 1.5 or more and 10.0 or less relative to the calcium content identified in the calcium content measurement step.
(11) The method for producing according to (9) or (10), in which the amount of the carbon dioxide introduced in the crystallization step is in a mass ratio of 2.0 or more and 5.0 or less relative to the calcium content identified in the calcium content measurement step.
(12) The method for producing according to any one of (9) to (11), in which no seed crystal is used.
(13) The method for producing according to any one of (9) to (12), in which the crystallization step is performed under an environment of a pH of 7.0 or more.
(14) The method for producing according to any one of (9) to (13), in which the calcium-containing solution does not substantially include sodium, potassium, or magnesium.

The present invention also includes the following inventions.
<1> A resin composition including:
   a calcium carbonate particle group; and
   a thermoplastic resin, in which
   the calcium carbonate particle group includes 70.0% or more of cubic calcium carbonate particles relative to the number of particles in the entire calcium carbonate particle group,
   a length of each side of the cubic calcium carbonate particles is 0.5 um or more and 15.0 µm or less and difference in the length of the sides of the same cubic calcium carbonate particles is ±0.5 um or less,
   the calcium carbonate particle group includes 90.0% or more of light calcium carbonate particles relative to the number of particles in the entire calcium carbonate particle group, and
   a mass ratio of the calcium carbonate particle group and the thermoplastic resin is 60:40 to 80:20.
<2> The resin composition according to <1>, in which the length of each side of the cubic calcium carbonate particles is 1.0 µm or more and 5.0 µm or less.
<3> The resin composition according to <1> or <2>, in which a BET specific surface area of the calcium carbonate particle group is 0.1 m²/g or more and 20.0 m²/g or less.
<4> The resin composition according to any one of <1> to <3>, in which the calcium carbonate particle group does not substantially include sodium, potassium, or magnesium.
<5> The resin composition according to any one of <1> to <4>, in which surfaces of the cubic calcium carbonate particles are surface-treated with a fatty acid.
<6> The resin composition according to any one of <1> to <5>, in which the thermoplastic resin is a polypropylene resin and/or a polyethylene resin.
<7> A method for producing a calcium carbonate particle group, the method including:
   a calcium content measurement step of measuring a calcium content in a calcium-containing solution including a calcium compound; and
   a crystallization step of crystallizing calcium carbonate by introducing carbon dioxide into the calcium-containing solution after the calcium content measurement step, in which
   an amount of the carbon dioxide introduced in the crystallization step is determined based on the calcium content identified in the calcium content measurement step,
   the amount of the carbon dioxide introduced in the crystallization step is in a mass ratio of 2.0 or more and 5.0 or less relative to the calcium content identified in the calcium content measurement step, and
   no seed crystal is used in the crystallization step.
<8> The method for producing according to <7>, in which the crystallization step is performed under an environment of a pH of 7.0 or more.
<9> The method for producing according to <7> or <8>, in which the calcium-containing solution does not substantially include sodium, potassium, or magnesium.

### Advantageous Effects of Invention

According to the present invention, a technique for obtaining a calcium carbonate particle group having a high ratio of cubic calcium carbonate particles is provided.

### Brief Description of Drawing

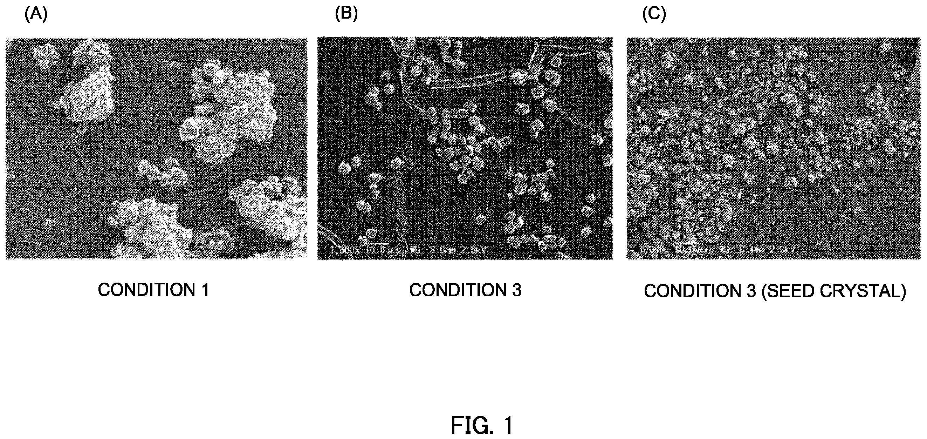

FIG. 1 includes photographs illustrating the result of observing the shape of crystals included in a calcium carbonate particle group produced in Examples by a scanning electron microscope (SEM).

### Description of Embodiments

Hereinafter, an embodiment of the present invention will be described. The present invention, however, is not limited to the embodiment.

### <Calcium carbonate particle group>

The calcium carbonate particle group according to the present invention satisfies all of the following requirements.
(Requirement 1) The calcium carbonate particle group includes 70.0% or more of cubic calcium carbonate particles relative to the number of particles in the entire calcium carbonate particle group.
(Requirement 2) The length of each side of the cubic calcium carbonate particles in (Requirement 1) described above is 0.5 um or more and 15.0 µm or less and the difference in the length of the sides of the same cubic calcium carbonate particles is ±0.5 um or less.
(Requirement 3) The calcium carbonate particle group includes 90.0% or more of light calcium carbonate particles relative to the number of particles in the entire calcium carbonate particle group.

In the present invention, the term "calcium carbonate particle group" means a mixture that mainly includes calcium carbonate particles.

The calcium carbonate particle group according to the present invention preferably includes 90.0% by mass or more, more preferably 95.0% by mass or more, further preferably 99.0% by mass or more, and most preferably 100% by mass of calcium carbonate particles relative to the calcium carbonate particle group.

As described in (Requirement 1), the calcium carbonate particle group according to the present invention includes 70.0% or more of the cubic calcium carbonate particles relative to the number of particles in the entire calcium carbonate particle group.

In the present invention, the term "cubic calcium carbonate particles" means light calcium carbonate particles of which crystals are cubic in shape.

The calcium carbonate particle group satisfying (Requirement 1) means a calcium carbonate particle group having a higher ratio of the cubic calcium carbonate particles than that in calcium carbonate particle groups obtained by conventional methods for producing the cubic calcium carbonate. This is because the conventional methods tend to produce agglomerates and the calcium carbonate particle group having a high ratio of the cubic calcium carbonate particles has been difficult to obtain.

Whether the calcium carbonate particle group satisfies (Requirement 1) is identified by scanning electron microscope (SEM) image analysis or other means.

In (Requirement 1), the lower limit of the ratio of the number of the cubic calcium carbonate particles relative to the number of particles in the entire calcium carbonate particle group is preferably 80.0% or more and more preferably 90.0% or more.

In (Requirement 1), the upper limit of the ratio of the number of the cubic calcium carbonate particles relative to the number of particles in the entire calcium carbonate particle group is preferably 100%.

As described in (Requirement 2), the cubic calcium carbonate particles included in the calcium carbonate particle group according to the present invention have a length of each side of the cubic calcium carbonate particles of 0.5 µm or more and 15.0 µm or less and the difference in a length of the sides of the same cubic calcium carbonate particles of ±0.5 µm or less.

The calcium carbonate particle group according to the present invention, however, may or may not include cubic calcium carbonate particles that do not satisfy (Requirement 2) or other shaped calcium carbonate particles, as long as (Requirement 1) is satisfied.

In the present invention, the phrase "difference in the length of the sides of the same cubic calcium carbonate particles" is represented as an absolute value.

Whether calcium carbonate particles satisfy (Requirement 2) is identified by the scanning electron microscope (SEM) image analysis or other means.

In (Requirement 2), the lower limit of the length of each side of the cubic calcium carbonate particles is preferably 0.7 um or more and more preferably 0.9 µm or more.

In (Requirement 2), the upper limit of the length of each side of the cubic calcium carbonate particles is preferably 5.0 µm or less and more preferably 3.0 µm or less.

In (Requirement 2), the lower limit of the difference in the length of the sides of the same cubic calcium carbonate particles is preferably 0 µm.

In (Requirement 2), the upper limit of the difference in the length of the sides of the same cubic calcium carbonate particles is preferably 0.4 um or less.

As described in (Requirement 3), the number of particles of the light calcium carbonate particles in the calcium carbonate particle group according to the present invention is 90.0% or more relative to the number of particles in the entire calcium carbonate particle group.

This value can be said to be the purity of the calcium carbonate particle group.

The term "light calcium carbonate particles" in the present invention means synthetic calcium carbonate produced by chemical precipitation reaction or the like and the light calcium carbonate particles are clearly distinguished from heavy calcium carbonate obtained by mechanically crushing natural calcium carbonate.

The cubic calcium carbonate particles included in the calcium carbonate particle group according to the present invention are a kind of light calcium carbonate particles.

The shape of the light calcium carbonate particles included in the calcium carbonate particle group according to the present invention is not particularly limited. From the viewpoint that the effects of the present invention are easily exhibited, a higher ratio of the cubic calcium carbonate particles is more preferable.

The present invention includes, for example, an aspect in which all of the light calcium carbonate particles in the calcium carbonate particle group according to the present invention are the cubic calcium carbonate particles.

Whether the calcium carbonate particle group satisfies (Requirement 3) is identified by scanning electron microscope (SEM) image analysis or other means.

In (Requirement 3), the lower limit of the ratio of the number of the light calcium carbonate particles relative to the number of particles in the entire calcium carbonate particle group is preferably 92.0% or more and more preferably 95.0% or more.

In (Requirement 3), the upper limit of the ratio of the number of particles of the light calcium carbonate particles relative to the number of particles in the entire calcium carbonate particle group is preferably 100%.

### (Other requirements)

In addition to the above requirements, the calcium carbonate particle group according to the present invention may satisfy any of or all of the following requirements.

The BET specific surface area of the calcium carbonate particle group according to the present invention is preferably 0.1 m²/g or more and 20.0 m²/g or less and more preferably 1.0 m²/g or more and 15.0 m²/g or less.

The calcium carbonate particle group having the BET specific surface area within the above range allows excellent processability to a resin composition blended with the calcium carbonate particle group to be easily provided.

In the present invention, the term "BET specific surface area" means a specific surface area identified by a BET adsorption method (nitrogen gas adsorption method). "BELSORP-mini" (manufactured by MicrotracBEL Corp.) can be preferably used as a measurement apparatus of the BET specific surface area.

The calcium carbonate particle group according to the present invention preferably does not substantially include sodium, potassium, or magnesium from the viewpoint of obtaining the calcium carbonate particle group having a high purity.

In the present invention, the phrase "calcium carbonate particle group does not substantially include a component A" means that the content of the component A (the converted amount of the component A) is preferably 5.0% by mass or less, more preferably 1.0% by mass or less, and most preferably 0% by mass relative to the calcium carbonate particle group.

The surface of the cubic calcium carbonate particles included in the calcium carbonate particle group according to the present invention may or may not be surface-treated, depending on the purpose (for example, improvement in dispersibility).

For example, fatty acids (higher fatty acids, higher fatty acid esters, higher fatty acid amides, higher fatty acid salts, etc.) may be exemplified as the kind of surface treatment agents.

### <Method for producing calcium carbonate particle group>

The present invention also includes a method for producing a calcium carbonate particle group including the following steps.

Calcium content measurement step: A calcium content in a calcium-containing solution including a calcium compound is measured.

Crystallization step: After the calcium content measurement step, calcium carbonate is crystallized by introducing carbon dioxide into the calcium-containing solution. The amount of the carbon dioxide introduced in the crystallization step is determined based on the calcium content identified in the calcium content measurement step.

With the method for producing including the calcium content measurement step and the crystallization step described above, the calcium carbonate particle group according to the present invention can be efficiently obtained.

### (Calcium content measurement step)

The calcium content measurement step is a step of measuring the calcium content in the calcium-containing solution including a calcium compound.

In the present invention, the term "calcium compound" is a compound that can be used as raw materials for calcium carbonate and includes a compound made of calcium or a compound including calcium.

Examples of the calcium compound include calcium hydroxide, calcium oxide, calcium sulfate, and calcium chloride.

The calcium compound may be in any state of solid, liquid (solution), and slurry.

The form of the calcium compound is not particularly limited and may be a purified product or any material including the calcium compounds (for example, wastes including calcium).

Examples of the wastes including calcium include concrete sludge, steel slag, coal ash, biomass ash, and incinerator ash.

From the viewpoint of increasing the collected amount of the calcium carbonate particles, however, the form of the calcium compounds is preferably a form that includes easily soluble elements other than calcium (for example, sodium, potassium, and magnesium) in a small amount or a form that includes no easily soluble elements.

In the present invention, the term "calcium-containing solution" means a solution including a calcium compound.

The solvent of the solution is not particularly limited. Examples of the solvent include water.

The method for preparing the calcium-containing solution is not particularly limited. The calcium-containing solution may be prepared by adding the solvent to the calcium compound or when the calcium compound is in a state of solution, this calcium compound may be used as it is as the calcium-containing solution.

The calcium-containing solution may be subjected to a solid-liquid separation operation prior to being used for the calcium content measurement. Such an operation allows a calcium-containing solution having few foreign matters (fine particles and the like) to be obtained. Therefore, a calcium content can be measured more accurately and, in addition, agglomeration of the calcium carbonate particles on the surface of the foreign matters can be prevented in the crystallization step described later.

In the case where the solid-liquid separation operation is performed, a solution from which a solid content is removed is collected as the calcium-containing solution.

Solid-liquid separation apparatuses used in the solid-liquid separation operation are not particularly limited. Examples of the solid-liquid separation apparatuses include filter presses, vacuum belt filters, vacuum rotary filters, screw decanters, and centrifugal dehydrators.

Conventionally, a method in which a coagulant (in particular, a coagulant including sodium, potassium, magnesium, or the like.) is added to the calcium-containing solution prior to the solid-liquid separation, whereby fine particles (colloidal particles and the like) are agglomerated to easily perform the solid-liquid separation has been known.

Such an operation, however, may cause the agglomerate of the calcium carbonate particles with each other to be also easily formed, which may decrease the collection amount of the cubic calcium carbonate particles. Therefore, in the present invention, such a coagulant is preferably unused.

In other words, the calcium-containing solution according to the present invention preferably does not substantially include sodium, potassium, or magnesium.

In the present invention, the phrase "calcium-containing solution does not substantially include a component A" means that the content of the component A (the converted amount of the component A) is preferably 5.0% by mass or less, more preferably 1.0% by mass or less, and most preferably 0% by mass relative to the calcium-containing solution.

As the method for measuring a calcium content in the calcium-containing solution, a method described in Examples may be adopted.

In the present invention, the term "calcium content" means the converted content of calcium ion.

### (Crystallization step)

In the crystallization step, after the calcium content measurement step, calcium carbonate is crystallized by introducing carbon dioxide into the calcium-containing solution to cause a reaction between Ca²⁺ ions and CO₃²⁻ions.

The method for producing a calcium carbonate particle group according to the present invention has a technical feature in that the amount of the carbon dioxide introduced in the crystallization step is determined based on the calcium content identified in the calcium content measurement step.

As a result of the study conducted by the inventor of the present invention, the inventor of the present invention has found that the shape of the obtained calcium carbonate particles varies depending on the mass ratio of the amount of carbon dioxide introduced into the calcium-containing solution (hereinafter also referred to as "CO₂/Ca mass ratio") relative to the calcium content identified in the calcium content measurement step.

Specifically, it has been found that a small "CO₂/Ca mass ratio" causes calcium carbonate particles to easily agglomerate and calcium carbonate particles having various crystal forms to be possibly formed.

It has been found that as the "CO₂/Ca mass ratio" becomes larger, pH becomes higher and thus the calcium carbonate particles are difficult to crystallize.

On the other hand, it has been found that the "CO₂/Ca mass ratio" within a predetermined range allows the cubic calcium carbonate particles to be easily formed.

Therefore, adjusting the "CO₂/Ca mass ratio" allows the shape of the crystals in the calcium carbonate particle group to be controlled.

From the viewpoint that a sufficient amount of the cubic calcium carbonate particles is included and the calcium carbonate particle group having less agglomerates is easily obtained, the "CO₂/Ca mass ratio" is preferably 1.5 or more and 10.0 or less, more preferably 2.0 or more and 5.0 or less, and further preferably 3.0 or more and 5.0 or less.

From the viewpoint of easily obtaining the calcium carbonate particle group that contains a sufficient amount of the cubic calcium carbonate particles and has few agglomerates, the "CO₂/Ca mass ratio" may be adjusted to 1.3 or more and 9.1 or less in the case where the ratio is converted to a molar ratio.

For example, in the case where the calcium content in the calcium-containing solution is 10 g (= 0.25 mol), the amount of the carbon dioxide introduced may be adjusted to 20 g (= 0.45 mol).

The other conditions in the crystallization step (for example, an apparatus to be used and a method for introducing (blowing in or the like) carbon dioxide) are not particularly limited. Conditions used in conventional methods for producing calcium carbonate may be employed.

The introduction speed of carbon dioxide may be 0.01 L/min or more and 10 L/min or less.

The carbon dioxide introduction time may be 60 minutes or more and 240 minutes or less.

The carbon dioxide introduction temperature may be 10°C or more and 40°C or less.

From the viewpoint of preventing calcium dissolution, the crystallization step is preferably performed at a pH of 7.0 or more and more preferably at a pH of 8.0 or more.

The upper limit of the pH is not particularly limited and is usually a pH of 13.0 or less.

Conventionally, use of a small amount of seed crystals in the crystallization step has been known to accelerate crystallization.

The use of the seed crystals, however, may cause the agglomerates of the calcium carbonate particles with each other to be easily formed due to crystal growth on the seed crystal surface or the particle size distribution to be broad because crystal growth on the seed crystal surface and the formation of new crystal nuclei proceed simultaneously. Therefore, use of no seed crystal is preferable in the present invention.

### (Other steps)

The method for producing a calcium carbonate particle group according to the present invention is not particularly limited except that the calcium content measurement step and the crystallization step are included, and various conditions used in conventional methods for producing calcium carbonate may be employed.

For example, after the crystallization step, the calcium carbonate particle group may be collected by solid-liquid separation (filtration or the like) or the like.

Drying or pulverization may be performed on the collected calcium carbonate particle group.

### <Resin composition>

The calcium carbonate particle group according to the present invention can be used for any applications requiring calcium carbonate particles. For example, the calcium carbonate particle group according to the present invention can be preferably blended in a resin composition.

In the case where the calcium carbonate particles in the resin composition include agglomerates, torque may increase during molding. In such a case, molding and stretching become difficult and the properties (for example, tensile strength or elongation at break) of the obtained molded product are inferior. As the content of calcium carbonate particles becomes higher in the resin composition, such problems more easily occur.

The calcium carbonate particle group according to the present invention, however, has a low agglomerate content and thus the above problems are less likely to occur.

### (Composition of resin composition)

The composition of the resin composition according to the present invention is not particularly limited. The mass ratio of the calcium carbonate particle group to a thermoplastic resin (calcium carbonate particle group:thermoplastic resin) is preferably 50:50 to 90:10, more preferably 60:40 to 80:20, and further preferably 60:40 to 70:30.

The kind of the thermoplastic resin is not particularly limited and is preferably a polypropylene resin and/or a polyethylene resin (for example, low density polyethylene, linear low density polyethylene, medium density polyethylene, and high density polyethylene).

The upper limit of the calcium carbonate particle group content is preferably 90.0% by mass or less and more preferably 80.0% by mass or less relative to the resin composition.

The lower limit of the calcium carbonate particle group content is preferably 50.0% by mass or more and more preferably 60.0% by mass or more relative to the resin composition.

The upper limit of the thermoplastic resin content is preferably 50.0% by mass or less and more preferably 40.0% by mass or less relative to the resin composition.

The lower limit of the thermoplastic resin content is preferably 10.0% by mass or more and more preferably 20.0% by mass or more relative to the resin composition.

### (Other components in resin composition)

In addition to the components described above, the resin composition according to the present invention can further include optional components to the extent that the optional components do not impair the effects of the present invention. Such components can be used singly or in combination of two or more of the components. The kind and amount of such components may be appropriately set depending on, for example, the effect to be obtained.

Examples of components that may be included in the resin composition according to the present invention include plasticizers, resins other than thermoplastic resins, fillers, colorants, lubricants, antioxidants, flame retardants, and foaming agents.

### <Method for producing resin composition>

The resin composition according to the present invention can be produced using the components described above in accordance with methods conventionally known as methods for producing a resin composition.

The resin composition is obtained, for example, by mixing and melt-kneading the components.

The timing of mixing and melt-kneading can be appropriately set depending on molding methods (for example, extrusion molding, injection molding, and vacuum molding) to be employed. For example, the mixing may be performed before feeding from the hopper of the molding machine or at the same time as molding. The melt-kneading may be performed, for example, by a twin-screw kneader.

The form of the resin composition according to the present invention may be, for example, pellets having any sizes and shapes.

The shape of the pellets is, for example, a cylinder shape, a spherical shape, or an ellipsoidal spherical shape.

The size of the pellets is not particularly limited. For example, in the case of the spherical pellets, the diameter may be 1 mm to 10 mm. In the case of the ellipsoidal spherical pellets, the pellets may have an aspect ratio of 0.1 to 1.0 and may have longitudinal and lateral lengths of 1 mm to 10 mm. In the case of the cylindrical pellets, the diameter may be 1 mm to 10 mm and the length may be 1 mm to 10 mm.

The resin composition according to the present invention can be dried, if necessary, and thereafter molded to provide a desired molded product.

Examples of the methods for molding include inflation molding methods, extrusion molding methods, injection molding methods, foam injection molding methods, injection compression molding methods, blow molding methods, press molding methods, calender molding methods, and vacuum molding methods.

Examples of the molded products include films, sheets, container products (for example, food containers), daily necessities, automotive parts, electric and electronic parts, and various consumable products.

### Examples

Hereinafter, the present invention will be further specifically described with reference to Examples. The present invention, however, is not limited to these Examples.

### <Preparation of calcium carbonate particle groups>

Calcium carbonate particle groups were prepared from a calcium-containing raw material by the following method.

All of the following tests were performed at room temperature (around 20°C).

### (Preparation of calcium-containing raw material)

Commercially available Portland cement was prepared as the calcium-containing raw material. The Portland cement includes calcium compounds such as calcium hydroxide.

### (Preparation of calcium-containing suspensions)

Ion-exchanged water (3,200 mL) was added to the calcium-containing raw material (800 g) and the resultant mixture was stirred to give a calcium-containing suspension.

### (Solid-liquid separation step)

The calcium-containing suspension was filtered through a solid-liquid separator to give a calcium-containing solution and a solid content.

The solid content was discarded and the calcium-containing solution was subjected to the following steps.

### (Calcium content measurement step)

The calcium content in the obtained calcium-containing solution (2,000 mL) was measured in accordance with ICP atomic emission spectrometry.

As a result, the calcium content in the calcium-containing solution was identified as 2.93 g (concentration: 1,463 mg/L).

The calcium-containing solution did not include sodium, potassium, or magnesium.

### (Crystallization step)

Carbon dioxide gas was introduced to the calcium-containing solution through a glass filter for 180 minutes (flow rate = 0.05 L/min) to crystallize calcium carbonate.

Carbon dioxide gas diluted with nitrogen gas was used.

As listed in Table 1, the amount of the carbon dioxide gas introduced was set so that the mass ratio of the amount of carbon dioxide to the calcium content in the calcium-containing solution (CO₂/Ca mass ratio) was 1.0 to 15.0.

"Condition 3 (seed crystal)" in Table 1 is an example in which the crystallization step was performed in the same manner as "Condition 3" in Table 1 except that a calcium-containing solution to which seed crystals (calcium carbonate, 0.6 g) were added was used.

### (Collection of calcium carbonate particle group)

After the crystallization step, suction filtration was performed to collect the solid content (corresponding to the calcium carbonate particle group).

### (SEM observation)

The shape of the crystals included in each of the obtained calcium carbonate particle groups was observed by a scanning electron microscope (SEM). Some of the results are shown in FIG. 1.

With respect to the crystals included in each of the calcium carbonate particle groups, the shape, the amount of agglomerates, and the ratio of the number of cubic calcium carbonate particles to the number of particles in the entire calcium carbonate particle group were identified based on image analysis of the SEM observation.

In Examples, the term "cubic calcium carbonate particles" means that the length of each side is 0.5 um or more and 15.0 um or less and the difference in the length of the sides of the same cubic calcium carbonate particles is ±0.5 um or less.

The results are listed in the sections of "Main shape", "Agglomerates", and "Ratio of cubic particles" in Table 2.

### (Purity)

With respect to each of the obtained calcium carbonate particle groups, the number of particles (purity) of the light calcium carbonate particles was measured relative to the number of particles in the entire calcium carbonate particle group by X-ray diffraction, scanning electron microscope (SEM) image analysis, and others. Some of the results are listed in the "Purity" section of Table 2.

### (Specific surface area)

The specific surface area (BET specific surface area) of each of the obtained calcium carbonate particle groups was measured in accordance with a BET adsorption method (nitrogen gas adsorption method) using "BELSORP-mini" (manufactured by MicrotracBEL Corp.). Some of the results are listed in the "Specific surface area" section of Table 2.

**[Table 1]**

| | Ca amount (g) | CO₂ amount (g) | CO₂/Ca Mass ratio |
|---|---|---|---|
| Condition 1 | 2.93 | 2.93 | 1.0 |
| Condition 2 | 2.93 | 5.86 | 2.0 |
| Condition 3 | 2.93 | 17.7 | 5.0 |
| Condition 4 | 2.93 | 29.3 | 10.0 |
| Condition 5 | 2.93 | 43.95 | 15.0 |
| Condition 3 (Seed crystal) | 2.93 | 17.7 | 5.0 |

**[Table 2]**

| | Main shape | Agglomer ate | Ratio of cubic particl es (%) | Purity (%) | Specific surface area (m²/g) |
|---|---|---|---|---|---|
| Conditi on 1 | Various shapes are mixed | Many | 10.0 | 88.1 | 0.05 |
| Conditi on 2 | Cubic | Relative ly few | 72.0 | 90.9 | 8.2 |
| Conditi on 3 | Cubic | Few | 85.0 | 91.5 | 10.0 |
| Conditi on 4 | Cubic | Few | 90.0 | 91.2 | 11.3 |
| Conditi on 5 | None (solved ) | None | 0.0 | Unmeasura ble | Unmeasura ble |
| Conditi on 3 (Seed crystal ) | Particl es cover surface of seed crystal | Many | 20.0 | 89.6 | 21.7 |

Of the calcium carbonate particle groups listed in Table 2, calcium carbonate particle groups satisfying the requirements of the present invention are the calcium carbonate particle groups obtained under Conditions 2 to 4.

As listed in Table 2 and FIG. 1, it was found that the cubic calcium carbonate particle groups having less agglomeration were obtained at high ratios by adjusting the "CO₂/Ca mass ratio".

In the case where the "CO₂/Ca mass ratio" was low, the cubic calcium carbonate particle group were difficult to obtain and many agglomerates were generated (Condition 1).

On the other hand, in the case where the "CO₂/Ca mass ratio" was high, the pH was noticeably below 7.0 due to an increase in the amount of carbon dioxide gas, resulting in partial dissolution of calcium carbonate. Consequently, accurate measurement could not be performed (Condition 5).

However, even when the "CO₂/Ca mass ratio" was an appropriate value, existence of the seed crystals caused crystal growth to occur on the surface of the seed crystals and agglomerates to be formed. Consequently, the cubic calcium carbonate particle group was difficult obtain (Condition 3 (seed crystal)).

With respect to the crystallization step, when change over time of the crystal type under "Condition 3" was observed, first, many colloidal agglomerates were produced, and then the agglomerates broke apart to be transformed into cubic crystals.

This reaction required at least 60 minutes, and thus it was considered that the crystallization step was preferably performed for at least 120 minutes.

Any of the calcium carbonate particle groups included no sodium, potassium, or magnesium.

### <Preparation of resin compositions>

Resin compositions were prepared by the following method using some of the calcium carbonate particle groups obtained in <Preparation of calcium carbonate particle groups>.

Each of the components listed in Tables 3 to 5 was melt-kneaded to prepare pellets (corresponding to the resin compositions). The unit of the values of the compositions in Tables is "% by mass".

Polypropylene (PP) and/or polyethylene (PE) was used as the resin.

The kinds of the used calcium carbonate particle groups are listed in the "CaCOs" section of Tables 3 to 5. In this section, for example, "Condition 3" means the calcium carbonate particle group obtained under "Condition 3" in <Preparation of calcium carbonate particle groups> described above.

### <Preparation of molded product>

An inflation-molded film was prepared as the molded product.

Specifically, a film having a thickness of 30 µm was prepared using an inflation film extrusion line (circular die having a diameter of 60 mm, a die gap of 1.2 mm, a screw diameter of 30 mm, and L/D ratio of 30). The film was treated with a BUR (Blow-Up Ratio) of 2.5.

In the extruder, the temperature in each section was set to 180°C to 200°C and the rotation speed was maintained at 20 rpm.

### <Evaluation of molded product>

The tensile strength and elongation at break of the obtained molded products were evaluated by the following methods. The results are listed in Tables 3 to 5.

### (Tensile strength and elongation at break)

From each film, dumbbell-shaped No. 3 test specimens in accordance with JIS K6251:2017 were obtained.

A tensile test of the obtained test specimens was performed at a temperature of 23°C using Strograph (manufactured by Toyo Seiki Seisaku-sho, Ltd.). Stretching speed was set to 100 mm/min.

The tensile strength (unit: MPa) and the elongation at break (unit: %) were measured from the obtained stress-strain curve and evaluated in accordance with the following criteria.

Higher values of the tensile strength and the elongation at break means better tensile strength and elongation at break.

### [Evaluation criteria of tensile strength]

A: Tensile strength exceeds 25 MPa.
B: Tensile strength is 15 MPa or more and less than 25 MPa.
C: Tensile strength is 5 MPa or more and less than 15 MPa.
D: Tensile strength is less than 5 MPa.

### [Evaluation criteria of elongation at break]

A: Elongation at break exceeds 250%.
B: Elongation at break is 150% or more and less than 250%.
C: Elongation at break is 50% or more and less than 150%.
D: Elongation at break is less than 50%.

**[Table 3]**

| | | Comparat ive Example 1-1 | Comparat ive Example 1-2 | Comparat ive Example 1-3 | Comparat ive Example 1-4 | Comparat ive Example 1-5 | Comparat ive Example 1-6 | Comparat ive Example 1-7 |
|---|---|---|---|---|---|---|---|---|
| Resin | PP | 60 | 50 | 20 | 10 | | | |
| | PE | | | | 10 | 60 | 50 | 20 |
| CaCO₃ | Condition 1 | 40 | 50 | 80 | 80 | 40 | 50 | 80 |
| Tensile strength | | C | C | D | D | C | C | D |
| Elongation at break | | C | D | D | D | C | D | D |

**[Table 4]**

| | | Example 1 | Example 2 | Example 3 | Example 4 | Example 5 | Example 6 | Example 7 |
|---|---|---|---|---|---|---|---|---|
| Resin | PP | 60 | 50 | 20 | 10 | | | |
| | PE | | | | 10 | 60 | 50 | 20 |
| CaCO₃ | Condition 3 | 40 | 50 | 80 | 80 | 40 | 50 | 80 |
| Tensile strength | | B | A | A | A | B | A | A |
| Elongation at break | | B | B | A | A | B | B | A |

**[Table 5]**

| | | Comparat ive Example 2-1 | Comparat ive Example 2-2 | Comparat ive Example 2-3 | Comparat ive Example 2-4 | Comparat ive Example 2-5 | Comparat ive Example 2-6 | Comparat ive Example 2-7 |
|---|---|---|---|---|---|---|---|---|
| Resin | PP | 60 | 50 | 20 | 10 | | | |
| | PE | | | | 10 | 60 | 50 | 20 |
| CaCO₃ | Condition 3 (Seed crystal) | 40 | 50 | 80 | 80 | 40 | 50 | 80 |
| Tensile strength | | C | C | D | D | C | C | D |
| Elongation at break | | C | D | D | D | C | D | D |

As listed in Tables 3 to 5, the sheets obtained from the resin compositions including calcium carbonate particle groups that satisfied the requirements of the present invention had excellent tensile strength and elongation at break.

The calcium carbonate particle groups that satisfied the requirements of the present invention had excellent flowability and were easily kneaded, and no increase in torque was indicated when the resin compositions were prepared.

In addition, the sheets obtained from the resin compositions including the calcium carbonate particle groups that satisfied the requirements of the present invention had few surface irregularities and excellent appearance.

In contrast, as listed in Tables 3 to 5, the sheets obtained from the resin compositions including the calcium carbonate particle groups that did not satisfy the requirements of the present invention had inferior tensile strength and/or elongation at break.

In addition, the calcium carbonate particle groups that did not satisfy the requirements of the present invention had poor flowability and increased torque when the resin compositions were prepared.

## Claims

1. A calcium carbonate particle group comprising:
70.0% or more of cubic calcium carbonate particles relative to number of particles in the entire calcium carbonate particle group, wherein
a length of each side of the cubic calcium carbonate particles is 0.5 um or more and 15.0 µm or less and difference in the length of the sides of the same cubic calcium carbonate particles is ±0.5 um or less, and
the calcium carbonate particle group comprises 90.0% or more of light calcium carbonate particles relative to the number of particles in the entire calcium carbonate particle group.

2. The calcium carbonate particle group according to claim 1, wherein the length of each side of the cubic calcium carbonate particles is 1.0 um or more and 5.0 µm or less.

3. The calcium carbonate particle group according to claim 1 or 2, wherein a BET specific surface area of the calcium carbonate particle group is 0.1 m²/g or more and 20.0 m²/g or less.

4. The calcium carbonate particle group according to any one of claims 1 to 3, wherein the calcium carbonate particle group does not substantially include sodium, potassium, or magnesium.

5. The calcium carbonate particle group according to any one of claims 1 to 4, wherein surfaces of the cubic calcium carbonate particles are surface-treated with a fatty acid.

6. A resin composition comprising:
the calcium carbonate particle group according to any one of claims 1 to 5; and
a thermoplastic resin, wherein
a mass ratio of the calcium carbonate particle group and the thermoplastic resin is 50:50 to 90:10.

7. The resin composition according to claim 6, wherein the mass ratio of the calcium carbonate particle group and the thermoplastic resin is 60:40 to 80:20.

8. The resin composition according to claim 6 or 7, wherein the thermoplastic resin is a polypropylene resin and/or a polyethylene resin.

9. A method for producing a calcium carbonate particle group, the method comprising:
a calcium content measurement step of measuring a calcium content in a calcium-containing solution including a calcium compound; and
a crystallization step of crystallizing calcium carbonate by introducing carbon dioxide into the calcium-containing solution after the calcium content measurement step, wherein
an amount of the carbon dioxide introduced in the crystallization step is determined based on the calcium content identified in the calcium content measurement step.

10. The method for producing according to claim 9, wherein the amount of the carbon dioxide introduced in the crystallization step is in a mass ratio of 1.5 or more and 10.0 or less relative to the calcium content identified in the calcium content measurement step.

11. The method for producing according to claim 9 or 10, wherein the amount of the carbon dioxide introduced in the crystallization step is in a mass ratio of 2.0 or more and 5.0 or less relative to the calcium content identified in the calcium content measurement step.

12. The method for producing according to any one of claims 9 to 11, wherein no seed crystal is used.

13. The method for producing according to any one of claims 9 to 12, wherein the crystallization step is performed under an environment of a pH of 7.0 or more.

14. The method for producing according to any one of claims 9 to 13, wherein the calcium-containing solution does not substantially include sodium, potassium, or magnesium.
